# EUROPÄISCHE PATENTSCHRIFT

(11) **EP 1 492 731 B1**
(45) Veröffentlichungstag und Bekanntmachung des Hinweises auf die Patenterteilung: **02.11.2006**
(21) Anmeldenummer: 03727177.2
(22) Anmeldetag: 04.04.2003
(51) Int. Cl.: C02F 1/04

(54) **VERDAMPFERROHR FÜR EINE MEERWASSERENTSALZUNGSANLAGE**
EVAPORATOR TUBE FOR A SEA WATER DESALINATION PLANT
TUBE DE VAPORISATION POUR INSTALLATION DE DESSALEMENT D'EAU DE MER

(30) Priorität: 05.04.2002 DE 10215124
(43) Veröffentlichungstag der Anmeldung: 05.01.2005
(73) Patentinhaber: WME Gesellschaft für windkraftbetriebene Meerwasserentsalzung mbH, 18556 Dranske/Rügen (DE)
(72) Erfinder: PLANTIKOW, Ulrich, 81373 München (DE)
(74) Vertreter: Kuhnen & Wacker
(86) Internationale Anmeldenummer: PCT/DE2003/001124
(87) Internationale Veröffentlichungsnummer: WO 2003/085143

(56) Entgegenhaltungen:
- GB-A- 1 284 180
- US-A- 2 966 340
- US-A- 3 766 019
- US-A- 4 132 587
- US-A- 6 066 232
- PATENT ABSTRACTS OF JAPAN vol. 017, no. 181 (M-1394), 8. April 1993 (1993-04-08) & JP 04 335949 A (FUJIKURA LTD;OTHERS: 01), 24. November 1992 (1992-11-24)

## Beschreibung

Die Erfindung betrifft ein Verdampferrohr für eine Meerwasserentsalzungsanlage, mittels welcher insbesondere in Gebieten mit geringen Süßwasserreserven Trink- bzw. Brauchwasser aus dem Meer gewonnen wird.

In der Praxis haben sich verschiedene Verfahren zur Meerwasserentsalzung mittels Destillation durchgesetzt. Die hierfür eingesetzten, bekannten Anlagen sind: mehrstufige Entspannungsverdampfungs- oder multi-stage-flash-Anlagen (MSF), Multieffect-Anlagen (ME), sowie mechanische und thermische Dampfverdichtungsanlagen (mechanical vapour compression (MVC), thermal vapour compression (TMC)). Bei all diesen Anlagen wird eine Mehrzahl von Verdampferrohren zum Verdampfen des Meerwassers sowie zur Rückgewinnung der Verdampfungsenergie eingesetzt, die typischerweise zu einem Verdampferrohrbündel von beispielsweise ca. 1000 Verdampferrohren zusammengefaßt sind. Dabei sind diese Verdampferrohre entweder stehend, wie bei Fallfilmverdampfem, oder auch liegend eingebaut.

Im Betrieb wird die Rohraußen- oder Rohrinnenseite mit einem Meerwasserfilm beaufschlagt und der hierbei erzeugte Dampf zur anderen Rohrseite geführt, wo er unter etwas höherem Druck und daher auch bei höherer Temperatur kondensiert. Die dabei freigewordene Kondensationswärme wird durch die Rohrwandung hindurch auf die andere Rohrseite geleitet und führt dort zur Verdampfung einer entsprechenden Meerwassermenge aus dem Meerwasserfilm.

Aufgrund der Betriebsbedingungen müssen die Verdampferrohre in allen Anlagen sowohl gegen Meerwasser als auch gegen destilliertes Wasser beständig sein und dennoch einen guten Wärmedurchgang ermöglichen. In der Praxis haben sich bislang Verdampferrohre aus Aluminium-Legierungen sowie aus Legierungen mit Kupfer, Nickel und Eisen (CuNiFe-Rohre) durchgesetzt. Beide Materialien zeichnen sich durch eine gute Wärmeleitfähigkeit aus. Dabei sind Aluminiumrohre billiger, wobei sie jedoch nur bei Temperaturen bis maximal 60 - 70 °C wirtschaftlich und dauerhaft eingesetzt werden können. Bei CuNiFe-Rohren kann dagegen durch einen höheren Nickelanteil eine verbesserte Meerwasserbeständigkeit auch bei höheren Temperaturen erzielt werden. Mit steigendem Nickelanteil wächst jedoch auch der Preis dieser Verdampferrohre, worunter die Wirtschaftlichkeit der Meerwasserentsalzungsanlage insgesamt leidet. Die derzeit verwendeten Verdampferrohre haben ferner üblicherweise eine Wandstärke von 2 mm, was sich zwar positiv auf die Standzeit der Rohre auswirkt, aber wegen der Vielzahl der benötigten Rohre auch das Gewicht der gesamten Meerwasserentsalzungsanlage in erheblichen Maße bestimmt. Dies erhöht den Logistikaufwand für den Aufbau derartiger Meerwasserentsalzungsanlagen insbesondere in abgelegenen Gebieten wesentlich.

Ferner sind die Anforderungen an die Korrosionsfestigkeit besonders hoch, wenn derartige Meerwasserentsalzungsanlagen bei unterschiedlichen, nicht konstanten Betriebsbedingungen betrieben werden. Wie die praktischen Erfahrungen mit Anlagen gemäß der DE 36 13 871 A1 gezeigt haben, unterliegen sowohl Aluminium- als auch CuNiFe-Rohre in windkraftgetriebenen Dampfverdichtungsanlagen zur Meerwasserentsalzung einem erheblich schnelleren Korrosionsangriff als in entsprechenden stationär betriebenen Anlagen, bei denen die Energiezufuhr konstant ist. Interessanterweise erwies sich der korrosive Angriff bei CuNiFe-Rohren auf der Destillatseite als erheblich stärker wie auf der Meerwasserseite.

Zudem ist bei windkraftgetriebenen Dampfverdichtungsanlagen zur Meerwasserentsalzung auch die Gefahr der Belagsbildung auf den Verdampferrohren wesentlich größer als bei stationär betriebenen Anlagen, wie die Praxis ergeben hat. Dies begründet sich offensichtlich darin, daß die Verdampferrohre bei Windflauten und Schwachwindphasen trocken laufen. Die als Gegenmaßnahme in der Regel eingesetzten handelsüblichen Antiscalingmittel haben sich als nicht geeignet zur Lösung dieses Problems erwiesen, da sie die Belagsbildung nur unzureichend verzögern können. Eine wirksame Verhinderung von Kalkablagerungen ist derzeit nur durch ein Austreiben des Karbonats als Kohlendioxid mittels einer Säure vor der Verdampfung des Meerwassers möglich. Hieraus ergibt sich jedoch das weitere Problem, daß aufgrund von Fehlern in der Säuredosierung mit zu hoher Säurezugabe gerechnet werden muß, weshalb die Verdampferrohre auch bei niedrigen ph-Werten korrosionsfest sein müssen.

Der Erfindung liegt daher die Aufgabe zugrunde, ein Verdampferrohr für eine Meerwasserentsalzungsanlage derart weiterzubilden, daß es die Nachteile im Stand der Technik überwindet und auch für einen Einsatz in nicht kontinuierlich betriebenen Meerwasserentsalzungsanlagen geeignet ist.

Diese Aufgabe wird durch ein Verdampferrohr mit den Merkmalen des Anspruches 1 gelöst. So ist es erfindungsgemäß erstmals vorgesehen, daß es aus einem gegen Meerwasser beständigen und zugleich säurefesten Stahl ausgebildet ist, und daß es eine Wandstärke zwischen 0,1 mm und 0,5 mm aufweist.

Insbesondere nimmt die Erfindung somit erstmals Abstand von dem bislang vorherrschenden Vorurteil, daß Stahl nicht als Material für Verdampferrohre in Meerwasserentsalzungsanlagen geeignet sei. So wurde bisher lediglich in Betracht gezogen, daß nur spezielle hochlegierte Stähle die erforderliche Korrosionsfestigkeit bei den in Meerwasserentsalzungsanlagen vorherrschenden Bedingungen aufweisen, wobei derartige Stähle üblicherweise eine sehr geringe Wärmeleitfähigkeit haben. Erfindungsgemäß wurde nun erkannt, daß es bei einer Verwendung eines derartigen-Stahls jedoch möglich ist, die bislang vorgesehenen Wandstärken von wenigstens 2 mm deutlich zu reduzieren, ohne die Stabilität der Anordnung wesentlich zu beeinträchtigen. Damit wird der an sich gegebene Nachteil der geringeren Wärmeleitfähigkeit dieses Materials durch eine Verkürzung der Wärmeleitstrecke behoben. Zudem wurde im Zuge der Erfindung erkannt, daß der Wärmeübergang an den Oberflächen der Verdampferrohre auf den Dampf bzw. auf das Meerwasser eine wesentlich größere Rolle für die Wärmeübertragung vom Destillatdampf auf den Meerwasserfilm spielt als die Wärmeleitung durch die Rohrwandung.

Damit können nun für einen wirtschaftlichen Betrieb einer Meerwasserentsalzungsanlage erfindungsgemäß erstmals auch Verdampferrohre aus Stahl eingesetzt werden, woraus sich zudem eine wesentlich höhere Korrosionsbeständigkeit ergibt, als dies bei den herkömmlichen Verdampferrohren der Fall war. Da derartige Stähle zudem stabiler gegenüber niedrigen ph-Werten sind, können sie auch vorteilhafterweise bei Anlagen eingesetzt werden, in welchen Säure vor dem Verdampfungsvorgang zum Meerwasser zugegeben wird, wodurch eine Belagsbildung auf den Verdampferrohren zuverlässig verhindert werden kann. Das erfindungsgemäße Verdampferrohr eignet sich somit auch besonders gut für windkraftgetriebene Meerwasserentsalzungsanlagen.

Von weiterem Vorteil ist, daß Rohre aus derartigen Stählen zu einem wettbewerbsfähigen Preis erhältlich sind. Hierbei ist die Wandstärke des erfindungsgemäßen Verdampferrohres aufgrund der erforderlichen mechanischen Stabilität auf wenigstens etwa 0,1 mm beschränkt. Derartige sehr dünne Rohre eignen sich insbesondere für Anlagen, bei denen im Rohrinnenraum ein höherer Druck herrscht als auf der Außenseite, d. h. für Anlagen, bei denen das Destillat auf der Rohrinnenseite kondensiert.

Aufgrund der vorteilhaften Festigkeitseigenschaften derartiger nichtrostender Stähle z.B. im Vergleich zu herkömmlichen CuNiFe-Werkstoffen können diese jedoch erfindungsgemäß auch bei Anlagen eingesetzt werden, bei denen im Rohrinnenraum ein geringerer Druck herrscht als auf der Außenseite. Dies ist insbesondere bei Fallfilmverdampfern gegeben. Trotz der geringen Wandstärke kann erfindungsgemäß somit ein Einknicken eines Verdampferrohrs zuverlässig und auf Dauer vermieden werden.

Dabei ist es von weiterem Vorteil, daß sich das Gewicht des Verdampferrohres und somit auch des Bündels an Verdampferrohren in einer Meerwasserentsalzungsanlage aufgrund der erfindungsgemäß gering gewählten Wanddicke niedrig halten läßt.

Das erfindungsgemäße Verdampferrohr läßt sich somit wirtschaftlich bereitstellen und einsetzen, und zeichnet sich insbesondere durch eine hohe Korrosionsfestigkeit bei gutem Wärmedurchgang aufgrund der dünnen Wandung aus.

Vorteilhafte Weiterbildungen der Erfindung sind Gegenstand der abhängigen Ansprüche.

So kann das Verdampferrohr aus Stahl mit der Werkstoffnummer 1.4565S nach DIN EN 10 088-2 (USA: ASTM/UNS S 34565) ausgebildet sein, was ein extrem meerwasserbeständiger Stahl ist. Dann erreichen auch sehr dünne Verdampferrohre eine ausreichende Standzeit von vielen Jahren. Dieser Werkstoff, der eine Zugfestigkeit Rm von 800-1000 N/mm² sowie eine Bruchdehnung von mindestens 30% und eine 0,2%-Dehngrenze Rp 0,2 von mindestens 420 N/mm² zeigt, trägt den Kurznamen X3CrNiMnMoNbN 23-17-5-3 und hat sich in praktischen Versuchen sehr bewährt.

Ferner hat es sich für die üblichen Anwendungsfälle als am geeignetsten erwiesen, wenn die Wandstärke des Verdampferrohrs zwischen 0,2 mm und 0,3 mm liegt. Eine derartige Wandstärke stellt einen guten Kompromiß zwischen den funktionalen Erfordernissen und der Handhabbarkeit derartiger Verdampferrohre dar.

Von weiterem Vorteil ist es, wenn das Verdampferrohr aus einem Blech geformt und durch Verschweißen hergestellt ist, da es dann besonders preisgünstig bereitgestellt werden kann. Derartige Stahlbleche bzw. -bänder lassen sich mit geringem technologischen Aufwand in der gewünschten Weise verformen und so verschweißen, daß sich die Rohrgestalt herstellen läßt. Hierbei können insbesondere bei der Anwendung eines automatischen Laserschweißverfahrens hochwertige Schweißnähte erzeugt werden, die eine mit dem Rohr vergleichbare Korrosionsfestigkeit aufweisen, so daß die Verbindungsstelle keine Schwachstelle am erfindungsgemäßen Verdampferrohr darstellt. Das erfindungsgemäße Verdampferrohr läßt sich somit noch kostengünstiger bereitstellen.

Ferner kann ein Rohrende des Verdampferrohres mit einem aus der gleichen Stahlsorte bestehenden Rohrboden verbunden sein. Dies hat den Vorteil, daß der zur Halterung und Führung der Verdampferrohre benötigte Rohrboden dann den gleichen Wärmeausdehnungskoeffizient wie das Verdampferrohr aufweist, und daß kein unterschiedliches Korrosionspotential vorliegt, wie dies bei Verwendung von zwei unterschiedlichen metallischen Werkstoffen der Fall wäre, welche in der Spannungsreihe der Metalle ein unterschiedliches Normalpotential aufweisen würden. In praktischen Versuchen hat es sich als besonders vorteilhaft und wirtschaftlich erwiesen, wenn das Rohrende mit dem Rohrboden durch Verschweißen, vorzugsweise durch Laserschweißen, verbunden ist. Hierbei kann das Rohrende bei einer ausreichenden Wandstärke auch direkt mit dem Rohrboden verschweißt werden. Dabei ist ferner zu berücksichtigen, daß der Rohrboden an den Enden der Verdampferrohre nicht nur der Halterung dient, sondern daß durch diesen Rohrboden bzw. mehrerer dieser Rohrböden auch Räume für das verdampfende Meerwasser und das kondensierte Destillat voneinander getrennt werden. Hierzu sind herkömmlich Kunststoff- oder Gummidichtungen zwischen einem Verdampferrohr und der Aussparung im Rohrboden erforderlich, welche aufgrund der erfindungsgemäß vorgesehenen Verschweißung dieser Komponenten entfallen können. Zudem hat sich in praktischen Versuchen gezeigt, daß eine derartige Verschweißung eine bessere und zuverlässigere Trennung der Bereiche für Meerwasser und Destillat herstellt, als dies durch Dichtungen der Fall war. So kann die Störanfälligkeit auf diese Weise wesentlich herabgesetzt werden. Ein weiterer Vorteil liegt darin, daß durch den Wegfall der Vielzahl an benötigten Dichtungen entsprechend der Anzahl an Verdampferrohren in der Meerwasserentsalzungsanlage auch ein erheblicher Preisvorteil erzielbar ist.

Von weiterem Vorteil ist es, wenn der Querschnitt des Verdampferrohrs von einer Kreisform abweicht. Mit anderen Worten können die Schnittlinien bei einem zur Rohrachse senkrechten oder schrägen Schnitt zumindest stellenweise von der Kreisform bzw. einer Ellipsenform abweichen, wobei dies durch Verformung der Rohre, z. B. durch Einprägung von umlaufenden Wendeln erfolgen kann. Hierdurch werden im Fallfilm zusätzlich Turbulenzen erzeugt, wodurch sich der Wärmeübergang verbessern läßt. Eine weitere Verbesserung des Wärmeübergangs resultiert zudem aus der mit der Verformung verbundenen Vergrößerung der Oberfläche der Rohrwandung. Durch derartige Verformungen des Verdampferrohrs kann der Fallfilm zudem aus der durch die Schwerkraft bedingten Richtung abgelenkt werden, was ein Abreißen des Flüssigkeitsfilms erschwert und die Gefahr einer Ausbildung trockener, vom Fallfilm nicht benetzter Stellen vermindert. Auf diese Weise läßt sich der Wirkungsgrad einer Meerwasserentsalzungsanlage erhöhen und zudem ist auch die Gefahr der Ausbildung von Ablagerungen auf der Wandung eines Verdampferrohres reduziert. Hierbei wird die Verformung der Rohrwandung vorzugsweise so durchgeführt, daß die Montage der Verdampferrohre und ihre Verbindung mit dem Rohrboden nicht erschwert wird. Dies ist z. B. dann der Fall, wenn der Rohrdurchmesser im verformten Bereich nirgends größer ist, als der Durchmesser des nicht verformten Rohres, und/oder wenn die zur Verbindung mit den Rohrböden vorgesehenen Bereiche nicht verformt werden.

Das erfindungsgemäße Verdampferrohr läßt sich somit in hervorragender Weise in den bekannten Meerwasserentsalzungsanlagen anwenden und gegebenenfalls auch nachrüsten. Ferner trägt es dazu bei, um den Wirkungsgrad, Zuverlässigkeit und Dauerhaftigkeit einer derartigen Meerwasserentsalzungsanlage wesentlich zu verbessern.

Die Erfindung läßt neben der aufgezeigten Ausführungsform weitere Gestaltungsansätze zu.

So kann anstelle des Stahls mit Werkstoffnummer 1.4565S nach DIN EN 10 088-2 auch ein anderer Stahl mit ähnlichen Eigenschaften angewendet werden. Beispiele hierfür sind die Stähle mit der Werkstoffnummer nach DIN EN 10 088-2 von 1.4439 (X2CrNiMoN 17-13-5, USA: UNS S31726) und 1.4539 (X1NiCrMoCu 25-20-5, USA: UNS N08904). Zudem können auch austenitische rostfreie Stähle wie die sog. 6% Mo-Stähle, zu denen AL-6XN, 1925 hMo SB8, 25-6Mo, 254 SMO, 20Mo-6, YUS 170, 2419 MoN, B66, 3127 hMo, 654 SMO u.a. zählen (UNS-Nr: N08367, N08932, N08926, S31254, N08026, N08925, S31266, N08031, S32654), angewendet werden. Überdies kann auch Titan oder eine Titanlegierung als Werkstoff für das Verdampferrohr verwendet werden.

Ferner kann das Verdampferrohr auch durch Strangpressen oder dgl. hergestellt werden.

## Patentansprüche

1. Verdampferrohr für eine Meerwasserentsalzungsanlage, **dadurch gekennzeichnet, daß** es aus einem gegen Meerwasser beständigen und zugleich säurefesten Stahl ausgebildet ist, und daß es eine Wandstärke zwischen 0,1 mm und 0,5 mm aufweist.

2. Verdampferrohr nach Anspruch 1, **dadurch gekennzeichnet, daß** es aus Stahl mit der Werkstoffnummer 1.4565S nach DIN EN 10 088-2 ausgebildet ist.

3. Verdampferrohr nach Anspruch 1 oder 2, **dadurch gekennzeichnet, daß** es eine Wandstärke zwischen 0,2 mm und 0,3 mm aufweist.

4. Verdampferrohr nach einem der Ansprüche 1 bis 3, **dadurch gekennzeichnet, daß** es aus einem Blech geformt und durch Verschweißen hergestellt ist.

5. Verdampferrohr nach einem der Ansprüche 1 bis 4, **dadurch gekennzeichnet, daß** ein Rohrende des Verdampferrohrs mit einem aus der gleichen Stahlsorte bestehenden Rohrboden, insbesondere durch Verschweißen, verbunden ist.

6. Verdampferrohr nach einem der Ansprüche 1 bis 5, **dadurch gekennzeichnet, daß** der Querschnitt des Verdampferrohrs von einer Kreisform abweicht.

## Claims

1. An evaporator tube for a sea water desalination system, **characterized in that** it is formed of a steel that is sea water resistant and at the same time acid resistant, and which has a wall thickness between 0.1 mm and 0.5 mm.

2. The evaporator tube in accordance with Claim 1, **characterized in that** it is formed of steel having material number 1.4565S in accordance with DIN EN 10 088-2.

3. The evaporator tube in accordance with Claim 1 or 2, **characterized in that** it has a wall thickness between 0.2 mm and 0.3 mm.

4. The evaporator tube in accordance with any one of Claims 1 to 3, **characterized in that** it is formed of a sheet metal and produced by welding.

5. The evaporator tube in accordance with any one of Claims 1 to 4, **characterized in that** a tube end of the evaporator tube is connected with a tube bottom consisting of a same steel type, in particular by welding.

6. The evaporator tube in accordance with any one of Claims 1 to 5, **characterized in that** the cross-section of the evaporator tube differs from a circular shape.

## Revendications

1. Tube de vaporisation pour installation de dessalement d'eau de mer, **caractérisé en ce qu'**il est réalisé à partir d'un acier résistant à l'eau de mer et simultanément résistant aux acides, et **en ce qu'**il comprend une épaisseur de paroi comprise entre 0,1 mm et 0,5 mm.

2. Tube de vaporisation selon la revendication 1, **caractérisé en ce qu'**il est réalisé à partir d'un acier doté du numéro de matériau 1.4565S selon la norme DIN EN 10 088-2.

3. Tube de vaporisation selon la revendication 1 ou 2, **caractérisé en ce qu'**il présente une épaisseur de paroi comprise entre 0,2 mm et 0,3 mm.

4. Tube de vaporisation selon l'une quelconque des revendications 1 à 3, **caractérisé en ce qu'**il est formé à partir d'une tôle et fabriqué par soudage.

5. Tube de vaporisation selon l'une quelconque des revendications 1 à 4, **caractérisé en ce qu'**une extrémité du tube de vaporisation est reliée, notamment par soudage, à un fond de tube constitué du même type d'acier.

6. Tube de vaporisation selon l'une quelconque des revendications 1 à 5, **caractérisé en ce que** la section transversale du tube de vaporisation s'écarte d'une forme circulaire.
